(19) **Europäisches Patentamt European Patent Office Office européen des brevets**

(11) **EP 1 936 402 B1**

(12) **EUROPEAN PATENT SPECIFICATION**

(45) Date of publication and mention
of the grant of the patent:
**27.07.2011 Bulletin 2011/30**

(51) Int Cl.:
***G01S 13/90*** *(2006.01)*

(21) Application number: **06425852.8**

(22) Date of filing: **21.12.2006**

(54) **Multiple-target radar recognition method and apparatus**

Mehrziel-Radarerkennungsverfahren und -vorrichtung

Procédé et appareil de reconnaissance par radar à cibles multiples

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**25.06.2008 Bulletin 2008/26**

(60) Divisional application:
**08162876.0 / 2 037 293**
**08162878.6 / 2 023 157**

(73) Proprietor: **SELEX Galileo S.p.A.**
**CAMPI BISENZIO (FI) (IT)**

(72) Inventor: **Aprile, Angelo**
**27010 GIUSSAGO (IT)**

(74) Representative: **Cerbaro, Elena et al**
**STUDIO TORTA**
**Via Viotti 9**
**10121 Torino (IT)**

(56) References cited:
• **LUO ET AL: "ISAR Imaging of Multiple Targets Based on Adaptive Gaussian Chirplet Decomposition" PROCEEDINGS OF 2006 CIE INTERNATIONAL CONFERENCE ON RADAR, 16 October 2006 (2006-10-16), - 19 October 2006 (2006-10-19) pages 1-4, XP002448204 Shanghai, China 2006, IEEE Piscataway, NJ, USA**

EP 1 936 402 B1

**Description**

The present invention relates to a multiple-target radar recognition method and apparatus.

As is known, various radar detection methods and equipment are used to monitor air and ground space, or as backup to combat systems. Some are designed to lock onto and track fixed or moving air targets within a monitored area, and to determine the position, speed, and trajectory of objects associated with a radar trace. Many known apparatuses, for example, feature so-called TWS (Track While Scan) and STT (Single Target Track) functions. Known apparatuses, however, operate with poor resolution both in range and cross-range (e.g. roughly 75 m and 1000-3000 m respectively). In this manner, however, it is impossible to determine the number, let alone the type, of targets associated with each trace, so that the limited information available is of little assistance in follow-up automatic or human decision-making procedures.

An example of a multiple-target radar recognition method is described in LUO ET AL: "ISAR Imaging of Multiple Targets Based on Adaptive Gaussian Chirplet Decomposition" PROCEEDINGS OF 2006 CIE INTERNATIONAL CONFERENCE ON RADAR, 16 October 2006 (2006-10-16), - 19 October 2006 (2006-10-19) pages 1-4, XP002448204 Shanghai, China 2006, IEEE Piscataway, NJ, USA. ISAR images are acquired, moving targets are detected and classified. The number of moving targets associated with ISAR images is also determined.

It is an object of the present invention to provide a method and apparatus designed to eliminate the drawbacks of the known art.

According to the present invention, there are provided a multiple-target radar recognition method and apparatus, as claimed in Claims 1 and 10 respectively.

A non-limiting embodiment of the invention will be described by way of example with reference to the accompanying drawings, in which:

Figure 1 shows a block diagram of a multiple-target radar recognition apparatus implementing the method according to the present invention;
Figure 2 shows a first example of an ISAR image used in the method according to the present invention;
Figure 3 shows a second example of an ISAR image used in the method according to the present invention;
Figure 4 shows an enlarged portion of the Figure 3 ISAR image;
Figure 5a shows a third example of an ISAR image used in the method according to the present invention;
Figure 5b shows a graphic representation of the result of applying a two-dimensional transform to the Figure 5a ISA image;
Figure 6 shows, schematically, a portion of the Figure 1 apparatus in use;
Figure 7 shows a simplified lateral longitudinal section of an aircraft engine interacting with the Figure 1 apparatus;
Figure 8 shows a fourth example of an ISAR image used in the method according to the present invention.

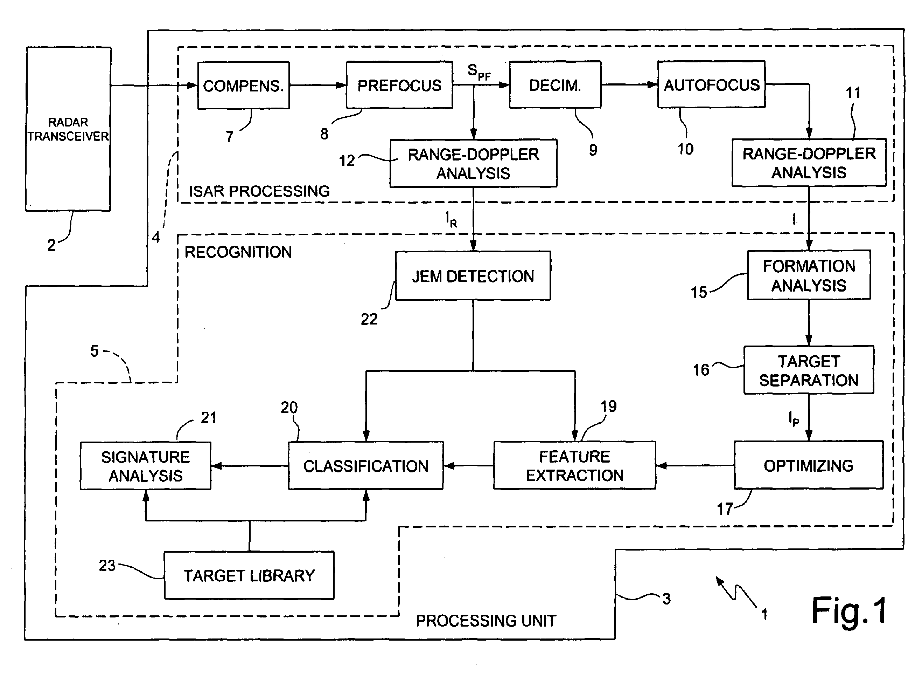

With reference to Figure 1, a multiple-target radar recognition apparatus 1 comprises a radar transceiver 2 having an antenna (not shown) and connected to a processing unit 3. Radar transceiver 2 emits electromagnetic pulses towards a monitored region, and receives return echoes from objects within the monitored region.

Processing unit 3 comprises an ISAR (Inverse Synthetic Aperture Radar) processing line 4, which produces ISAR images I from the return echoes picked up by radar transceiver 2; and a recognition stage 5. A known conversion stage (not shown) receives signals generated by radar transceiver 2 in response to the return echoes, and converts them into a format usable by ISAR processing line 4.

ISAR processing line 4, of a conventional type, performs a known ISAR procedure and, to this end, comprises a compensating module 7, a prefocus module 8, a decimating module 9, an autofocus module 10, and a first range-Doppler analysis module 11, cascade-connected to one another. Compensating module 7 provides for compensating rotation of the objects illuminated by radar transceiver 2. A prefocused signal $S_{PF}$ generated by prefocus module 8 is then processed by decimating module 9, which acts as a low-pass filter, i.e. reduces the sampling frequency. After automatic focusing by autofocus module 10, first range-Doppler analysis module 11 produces an ISAR image I in the form of a two-dimensional matrix of reflectivity values in range and Doppler coordinates.

A second range-Doppler analysis module 12 is connected downstream from prefocus module 8 to process the prefocused signal $S_{PF}$ supplied by prefocus module 8, and generates a raw ISAR image $I_R$.

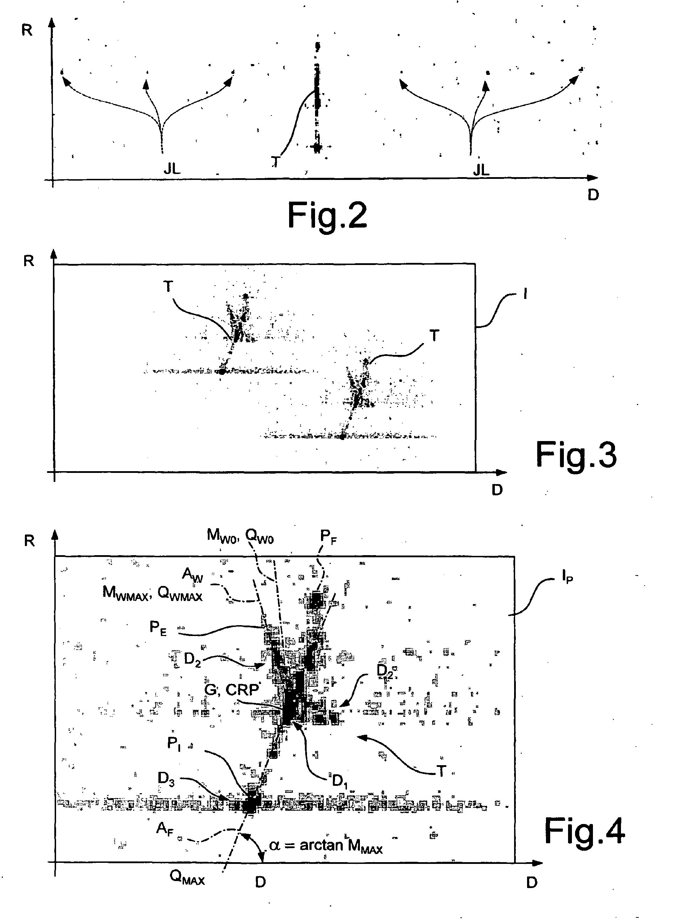

Recognition stage 5 comprises a formation analysis module 15, a target separation module 16, an optimization module 17, a feature extraction module 19, a classification module 20, and a signature analysis module 21 cascade connected to one another to form a classification line. The recognition stage also comprises a JEM (Jet Engine Modulation) detection module 22 cooperating with feature extraction module 19 and classification module 20; and a target library 23, in which features of a number of targets, preferably divided into classes, are memorized. More specifically, JEM detection module 22 uses prefocused signal $S_{PF}$ (before it is decimated) to determine the presence of equally spaced spectral lines (also known as JEM lines, Figure 2) caused by periodic rotation of parts such as turbines or propellers. In the raw ISAR image $I_R$, the JEM lines are displayed as equally spaced dots aligned along a line parallel to the Doppler axis and at a distance, along the range coordinate, equal to the distance of the engines from radar transceiver 2. The distance from the radar, the position and the relative distance in terms of Doppler shift between spectral lines (i.e. related to the rotation speed of the engine turbines) are supplied to feature extraction module 19 and classification module 20.

Formation analysis module 15 is configured to determine one or more moving targets T in the ISAR images I generated by processing line 5 (see also Figure 3). In the embodiment described here, targets T are aircraft, and are determined using a procedure described in detail below. More specifically, formation analysis module 15 supplies target separation module 16 with the number and position of targets T in ISAR image I. The direction, the dominant dimension of each target T, and the position of the ends of the target (in this case, start point $P_{IN}$ and end point $P_{FN}$ of the fuselage of a generic N-th target T) are preferably also determined.

Target separation module 16 is configured to perform two-dimensional filtering of ISAR images I. More specifically, filtration is performed locally about the target T positions determined by formation analysis module 15 (start points $P_{IN}$ and end points $P_{FN}$) to separate a respective portion $I_P$ of each ISA image I for each target T (Figure 4). Each portion $I_P$ of ISAR image I contains either one distinguishable target T, or groups of superimposed targets T. In the latter case too, however, filtration is centred about one of targets T shown, which is focused better after processing by optimization module 17, while the other superimposed targets are blurred, i.e. the information provided by them is partly removed.

Optimization module 17 receives the individual portions $I_P$ of ISAR image I, and optimizes focusing of targets T independently in each of them. More specifically, optimization comprises fine compensation of the translatory movement of target T with respect to radar transceiver 2, and compensation of distortion induced by rotation of the target, as explained below.

The optimized individual portions $I_P$ of ISAR image I are used by feature extraction module 19, which determines a predetermined set of geometric features of target T in each portion, also using the information supplied by JEM detection module 22. In the embodiment described here, in which targets T are aircraft, feature extraction module 19 determines the length, wing span, and the position and type of engines of each acquired target. The feature computing procedures are described in detail below.

Classification module 20 works on the features determined by feature extraction module 19, and on the information from JEM detection module 22 to determine a class of each target T. More specifically, the features of each target T are compared with corresponding specimen features of target classes stored in target library 23. For example, the information from JEM detection module 22 also includes the position of and the distance between the JEM lines JL, which, together with the estimated speed of target T, give an indication of the type of engines involved; and classification module 20 selects as possible target T classes those employing engines compatible with the information available.

In addition to criteria such as the one described above, selection of one of the target classes stored in target library 23 and assignment of target T are also preferably based on likelihood tests. That is, a normalized distance is defined as a weighted sum of the normalized differences between the values of the target T features (determined by feature extraction module 19) and the values of corresponding features of each of the possible classes stored in target library 20; and target T is assigned to the class from which it has the least distance, on the basis of the likelihood test. Weighting may be based, for example, on the importance of each feature, and the normalization factor is determined according to the variability of the features.

Classification module 20 therefore defines a subset S of possible targets from those in target library 23.

The subset S is supplied to signature analysis module 21, which identifies target T on the basis of distinguishing elements. More specifically, signature analysis module 21 may employ a dominant-diffuser map or, as an alternative, a vibration map of target T, which are compared respectively with dominant-diffuser maps and vibration maps stored in target library 23. In the Figure 4 example, the dominant diffusers of target T include a central portion of the fuselage $D_1$, the wings $D_2$, and the nose $D_3$.

The dominant-diffuser map of each target T is determined according to the positions of the relative reflectivity maximums (dominant diffusers, to which greater reflectivity is associated) in portions $I_P$ of ISAR images I of target T. The dominant-diffuser maps of the targets in target library 23 are constructed on the basis of ISAR images of known targets, or may be deduced, by electromagnetic radar response simulation, from corresponding models.

As regards the vibration maps, signature analysis module 21 uses the residual noise remaining in portions $I_P$ of ISAR images I after intervention of optimization module 17. More specifically, vibrations are actually brief rotary-translatory movements inconsistent with the speed of target T as a whole, and their blurring effect cannot be eliminated by compensating module 7 of ISAR processing line 4 (which compensates the movement of targets T as a whole). Vibration effects are compensated by optimization module 17, which in effect eliminates the phase non-linearity associated with vibration of the dominant diffusers of target T, normally located in the middle of the fuselage. Parts of target T with a different vibration regime from that of the dominant diffusers, however, remain unfocused, even after intervention of optimization module 17 (as in the Figure 4 example, which shows obvious traces of vibration associated with the nose of target T). By measuring the phase distortion of the signal, the vibration map of target T can be determined as a function of distance with respect to a reference point. The vibration map of target T (as a whole or selected parts of it) is a characteristic element enabling identification of target T.

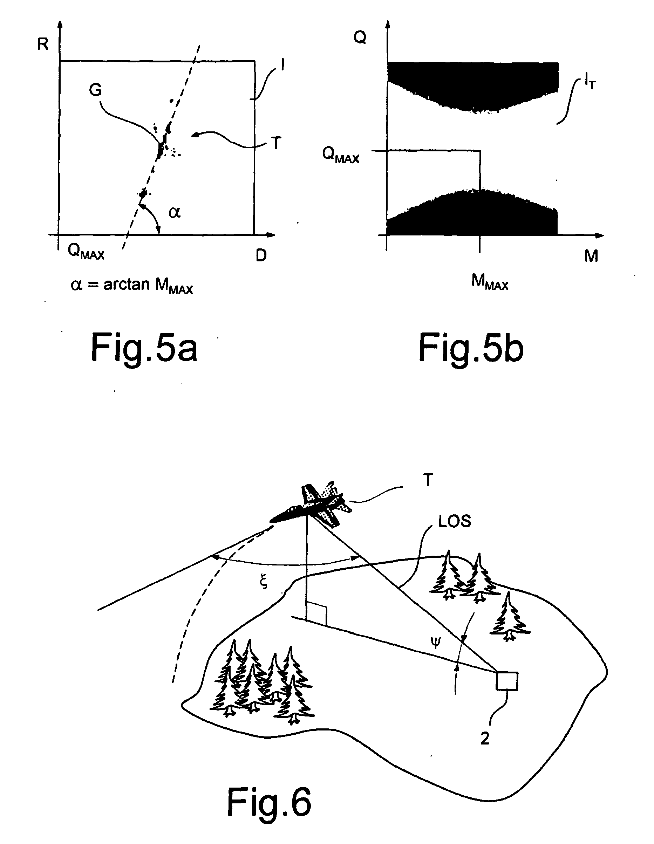

Operation of formation analysis module 15 will now be described in detail with reference also to Figures 5a and 5b.

Formation analysis module 15, in effect, applies a two-dimensional Radon transform to the ISAR images I generated by ISAR processing line 4. According to the embodiment described here, a Hough transform is applied, which is a particular type of Radon transform, in which the integration path is a straight line. The transform operates on the two-dimensional matrixes defining ISAR images I, by adding the reflectivity values of points in ISAR image I aligned along lines having a slope M and intercept Q varying in respective predetermined domains.

Purely by way of example, Figures 5a and 5b show, respectively, an ISAR image I and the corresponding transformed ISAR image IT, i.e. a graphic representation of the Hough transform applied to ISAR image I. The absolute maximum points and, possibly, relative maximum points indicate the fuselage direction of respective targets T in the analysed ISAR images I. In the Figure 5a and 5b example, the only target T shown is indicated by the line having maximum slope $M_{MAX}$ and maximum intercept $Q_{MAX}$ (corresponding to maximum luminosity in Figure 5b).

To simplify computation, the domains of slope M and intercept Q used to calculate the transform are selected about a reference slope $M_0$ and reference intercept $Q_0$, preferably determined as follows.

The reference slope $M_0$ for a target T rotating at angular speed (with respect to radar transceiver 2) is given by :

$$M_0 = \frac{\Delta f_D}{\Delta r} = -\frac{2}{\lambda}\left[(\tan \psi)\,\omega_H + \frac{\tan \xi}{\cos \psi}\,\omega_v\right] \qquad (1)$$

where r and $f_D$ are the range and Doppler coordinates respectively; $\psi$ is the antenna tilt (Figure 6); $\xi$ is the aspect angle of target T (i.e. the angle between the tangent to the trajectory of target T and the line of sight LOS of the radar antenna); $\lambda$ is the wavelength of the electromagnetic pulses emitted by radar transceiver 2; and $\omega_v$ and $\omega_H$ are angular speed components (along the vertical and horizontal axes, respectively, with respect to the line of sight LOS. All the above parameters of equation (1) are deducible from the estimated position and speed of target T (or of a group of targets not distinguishable at this stage of the procedure) obtained in known manner by conventional tracking.

Assuming target T is a level-flying aircraft, horizontal angular speed component $\omega_H$ is negligible, and reference slope $M_0$ is therefore given by :

$$M_0 = \frac{\Delta f_D}{\Delta r} = -\frac{2}{\lambda}\frac{\tan \xi}{\cos \psi}\,\omega_v \qquad (2)$$

Reference intercept $Q_0$, on the other hand, may be determined by imposing that a line of reference slope $M_0$ intersects the barycentre G, in terms of reflectivity, of ISAR image I (Figure 5a).

In effect, reference slope $M_0$ and reference intercept $Q_0$ provide an estimate of the position and direction of a corresponding target T. Narrowing down the domains of slope M and intercept Q to areas around reference slope $M_0$ and reference intercept $Q_0$ greatly simplifies calculation of the transform.

Formation analysis module 15 searches out the maximums in each transformed ISAR image IT (an $M_{MAX}$, $Q_{MAX}$ pair for each target T shown), and uses them to determine the position of each target T in the corresponding ISA image I. More specifically, the coordinates of the extremities (start point PIN and end point $P_{FN}$) of the fuselage of each visible target T are determined.

As stated, optimization module 17 in Figure 1 uses portions $I_P$ of ISAR image I, and provides for fine compensation of the translatory movement of target T with respect to radar transceiver 2, and for compensating distortion induced by rotation of the target. More specifically, for each target T, optimization module 17 determines the Doppler shift value of the point in the image corresponding to the mid-point of the fuselage (mid-point of the $P_{IN}$-$P_{FN}$ segment of target T); which value represents the translation speed error that must be compensated to focus the image. Once the compensation is made, the mid-point is taken as the central reference point CRP about which target T rotates (Figure 4).

Once the position of central reference point CRP is known, distortion induced by rotation of target T is eliminated using equation (2) and the maximum slope measurement $M_{MAX}$ (instead of reference slope $M_0$) to determine the actual rotation speed.

Feature extraction module 19 in Figure 1 determines the length, wing span, and the position, number, and type of engines of each acquired target T.

The length of each target T is calculated from start point PIN and end point $P_{FN}$ of the fuselage, and also taking into account the direction of the fuselage with respect to radar transceiver 2. Length is calculated after conversion of the Doppler coordinates to lengths.

As regards wing span (Figure 4), feature extraction module 19 determines a wing axis $A_w$ and a wing tip $P_E$. The wing span is considered equal to twice the distance between wing tip $P_E$ and the main axis $A_F$ of the fuselage. Wing axis $A_w$ is determined by again applying the Hough transform (or, as an alternative, the Radon transform) about a reference wing slope $M_{w0}$ and a reference wing intercept $Q_{w0}$ to obtain a maximum wing slope $M_{WMAX}$ and maximum wing intercept $Q_{WMAX}$. For example, reference wing intercept $Q_{W0}$ is the intercept corresponding to the intermediate point of segment $P_{IN}$-$P_{FN}$ of target T, and reference wing slope $M_{W0}$ is deduced from a model of the wing slope with respect to the fuselage.

The position of the engines is determined on the basis of the intersection between main axis $A_F$ of the fuselage of target T and the line containing JEM lines JL (see also Figure 2). Feature extraction module 19 also determines the speed of the engines (propeller, main turbine) on the basis of the distance between the JEM lines JL determined by JEM detection module 22.

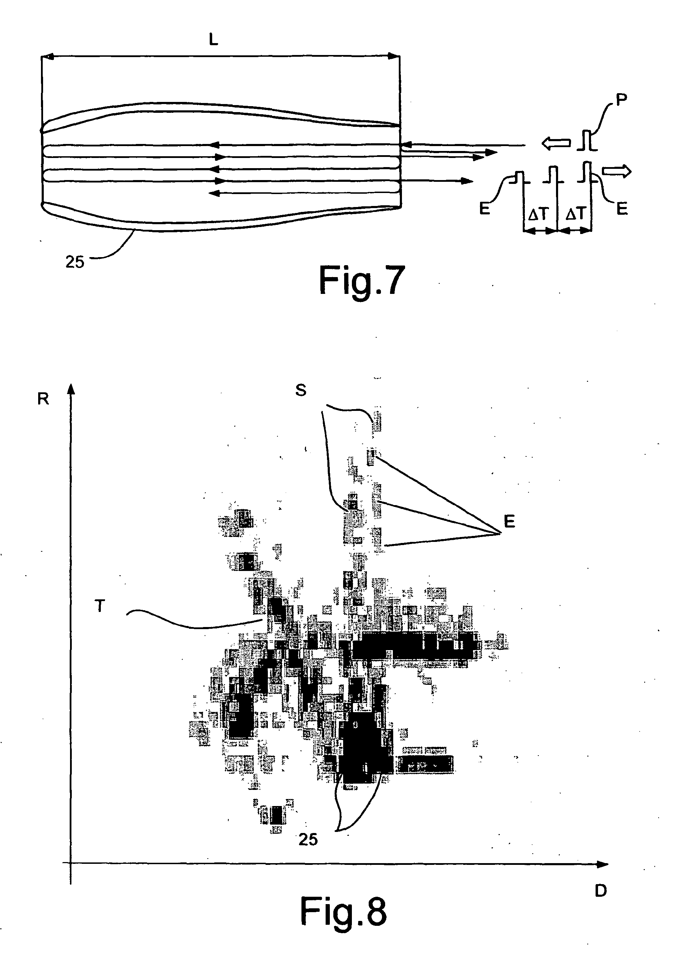

To determine the type of engines, feature extraction module 19 also determines their number and axial dimension. To do this, feature extraction module 19 exploits the reverberation generated by the engines, which, being substantially elongated hollow metal bodies, act as a waveguide for the electromagnetic pulses P emitted by radar transceiver 2 (as shown schematically in Figure 7). The electromagnetic pulses P, in fact, travel inside the engines (one of which is indicated 25 in Figure 7), and are reflected every time they reach one end of engines 25. The echoes E of consecutive reflections are delayed by a constant time interval $\Delta T$ related to the length L of engines 25. As shown in Figure 8, the corresponding ISAR image I therefore shows a reverberation stripe S for each engine 25 of target T. Moreover, because the reverberation echoes E are delayed by constant time intervals with respect to one another, reverberation stripes S are formed by equally spaced reflectivity peaks aligned in the range direction. Feature extraction module 19 determines the number of engines 25 on the basis of the number of reverberation stripes S visible in portion $I_P$ of ISAR image I (two in the Figure 8 example), and determines the length L of engines 25 on the basis of the distance between consecutive reverberation echoes E.

The present invention has several advantages. In particular, using relatively simple computation procedures, the method and apparatus described provide for high-definition ISAR images in both range and Doppler; for separately optimizing the images of each target in a radar trace; and for accurate target recognition. More specifically, using the (Hough or Radon) transform, individual targets can be determined with no computation problems, by simply determining narrow application domains to reduce the number of operations required.

Another advantage is the use of dominant-diffuser and/or vibration maps as target identification "signatures". Which means only a very small amount of dominant-diffuser geometry data and, possibly, a vibration profile need be stored in target library 23, as opposed to numerous complete ISAR maps for each type of target, on account of the profile varying according to the target observation angle. Efficiency in terms of the memory space required is therefore obvious.

Clearly, changes may be made to the device and method as described herein without, however, departing from the scope of the accompanying Claims. In particular, the method and apparatus according to the invention may obviously be used for recognizing not only air targets, but also any moving, in particular, sea and land, target in general. In which case, too, individual targets in a radar trace can be determined on the basis of the Hough or Radon transform, and the target "signature" analysed on the basis of dominant-diffuser geometry.

## Claims

1.    A multiple-target radar recognition method comprising the steps of:

> acquiring ISAR images (I) of a monitored region;
> detecting moving targets (T) in the acquired ISAR images (I); and
> classifying the targets (T) detected in the acquired ISAR images (I);
> wherein the step of detecting moving targets (T) comprises determining a number of targets (T) in the acquired ISAR images (I);
> **characterized in that** the step of detecting moving targets (T) comprises applying a two-dimensional transform to the acquired ISAR images (I) to generate transformed ISAR images ($I_T$).

2.    A method as claimed in Claim 1 wherein applying a two-dimensional transform comprises adding the values of points of the acquired ISAR images (I), aligned along lines having a slope (M) and an intercept (Q) varying in respective domains.

3.    A method as claimed in Claim 2, wherein the two-dimensional transform is a Radon transform.

4.    A method as claimed in Claim 2, wherein the two-dimensional transform is a Hough transform.

**5.** A method as claimed in any one of Claims 2 to 4, wherein the step of applying a two-dimensional transform comprises determining a slope domain about a reference slope ($M_0$) according to the equation :

$$M_0 = \frac{\Delta f_D}{\Delta r} = -\frac{2}{\lambda}\left[(\tan\psi)\,\omega_H + \frac{\tan\xi}{\cos\psi}\,\omega_V\right]$$

where r and $f_D$ are range and Doppler coordinates, respectively, in the acquired ISAR images (I) ; $\psi$ is the antenna tilt of a radar transceiver device (2) supplying electromagnetic pulses to acquire the ISAR images (I); $\xi$ is an aspect angle; $\lambda$ is a wavelength of the electromagnetic pulses emitted by the radar transceiver device (2): and $\omega_V$ and $\omega_H$ are angular speed components along vertical and horizontal axes, respectively, with respect to a line of sight (LOS) of the radar transceiver device (2).

**6.** A method as claimed in Claim 5, wherein the step of applying a two-dimensional transform comprises defining a slope domain about a reference slope ($M_0$) according to the equation :

$$M_0 = \frac{\Delta f_D}{\Delta r} = -\frac{2}{\lambda}\frac{\tan\xi}{\cos\psi}\,\omega_V$$

**7.** A method as claimed in any one of Claim 1 to 6, wherein the step of detecting targets (T) comprises searching for maximums ($M_{MAX}$, $Q_{MAX}$) in the transformed ISAR images ($I_T$).

**8.** A method as claimed in Claim 7, and comprising the step of using the maximums ($M_{MAX}$, $Q_{MAX}$) in the transformed ISAR images ($I_T$) to determine positions ($P_{IN}$, $P_{FN}$) of the targets (T) in the corresponding acquired ISAR images (I).

**9.** A method as claimed in Claim 8, and comprising the step of performing a two-dimensional filtering of the acquired ISAR images (I) locally about the positions ($P_{IN}$), $P_{FN}$) of the targets (T) to separate respective portions ($I_P$) of the acquired ISAR images (I) for each target (T).

**10.** A multiple-target radar recognition apparatus comprising a radar transceiver device (2) and a processing unit (3), wherein the processing unit (3) is configured to implement the method as claimed in any one of Claims 1 to 9.

**Patentansprüche**

**1.** Mehrfachziel-Radarerkennungsverfahren, das die folgenden Schritte umfasst:

Erfassen von ISAR-Bildern (I) eines überwachten Bereichs;
Detektieren von sich bewegenden Zielen (T) in den erfassten ISAR-Bildern (I); und
Klassifizieren der in den erfassten ISAR-Bildern (I) detektierten Ziele (T);
wobei der Schritt des Detektierens von sich bewegenden Zielen (T) das Bestimmen einer Anzahl von Zielen (T) in den erfassten ISAR-Bildern (I) umfasst;
**dadurch gekennzeichnet, dass**
der Schritt des Detektierens von sich bewegenden Zielen (T) das Anwenden einer zweidimensionalen Transformation auf die erfassten ISAR-Bilder (I), um transformierte ISAR-Bilder ($I_T$) zu erzeugen, umfasst.

**2.** Verfahren nach Anspruch 1, wobei das Anwenden einer zweidimensionalen Transformation das Hinzufügen der Werte von Punkten der erfassten ISAR-Bilder (I), die auf Linien ausgerichtet sind, die eine Neigung (M) und einen überstrichenen Bereich (Q) besitzen, die in den jeweiligen Domänen unterschiedlich sind, umfasst.

**3.** Verfahren nach Anspruch 2, wobei die zweidimensionale Transformation eine Radon-Transformation ist.

**4.** Verfahren nach Anspruch 2, wobei die zweidimensionale Transformation eine Hough-Transformation ist.

**5.** Verfahren nach einem der Ansprüche 2 bis 4, wobei der Schritt des Anwendens der zweidimensionalen Transformation das Bestimmen einer Neigungsdomäne um eine Referenzneigung ($M_0$) gemäß der folgenden Gleichung umfasst:

$$M_0 = \frac{\Delta f_D}{\Delta r} = -\frac{2}{\lambda}\left[\left(\tan \Psi\right)\omega_H + \frac{\tan \xi}{\cos \Psi}\omega_V\right]$$

wobei r und $f_D$ Bereichs- bzw. Doppler-Koordinaten in den erfassten ISAR-Bildern (I) sind; $\psi$ die Antennenneigung einer Radar-Sender/Empfänger-Vorrichtung (2) ist, die elektromagnetische Impulse liefert, um die ISAR-Bilder (I) zu erfassen; $\psi$ ein Aspektwinkel ist; $\lambda$ eine Wellenlänge der von der Radar-Sender/Empfänger-Vorrichtung (2) ausgesendeten elektromagnetischen Impulse ist; und $\omega_V$ und $\omega_H$ Winkelgeschwindigkeitskomponenten längs der vertikalen bzw. der horizontalen Achse in Bezug auf eine Sichtlinie (LOS) der Radar-Sender/Empfänger-Vorrichtung (2) sind.

**6.** Verfahren nach Anspruch 5, wobei der Schritt des Anwendens einer zweidimensionalen Transformation das Definieren einer Neigungsdomäne um eine Referenzneigung ($M_0$) gemäß der folgenden Gleichung umfasst:

$$M_0 = \frac{\Delta f_D}{\Delta r} = -\frac{2}{\lambda}\frac{\tan \xi}{\cos \Psi}\omega_V$$

**7.** Verfahren nach einem der Ansprüche 1 bis 6, wobei der Schritt des Detektierens von Zielen (T) das Suchen nach Maxima ($M_{MAX}$, $Q_{MAX}$) in den transformierten ISAR-Bildern ($I_T$) umfasst.

**8.** Verfahren nach Anspruch 7, das den Schritt des Verwendens der Maxima ($M_{MAX}$, $Q_{MAX}$) in den transformierten ISAR-Bildern ($I_T$) umfasst, um Positionen ($P_{IN}$, $P_{FN}$) der Ziele (T) in den entsprechenden erfassten ISAR-Bildern (I) zu bestimmen.

**9.** Verfahren nach Anspruch 8, das den Schritt des Ausführens einer zweidimensionalen Filterung der erfassten ISAR-Bilder (I) lokal um die Positionen ($P_{IN}$, $P_{FN}$) der Ziele (T) umfasst, um jeweilige Abschnitte ($I_P$) der erfassten ISAR-Bilder (I) für jedes Ziel (T) zu trennen.

**10.** Mehrfachziel-Radarerkennungsvorrichtung, die eine Radar-Sender/Empfänger-Vorrichtung (2) und eine Verarbeitungseinheit (3) umfasst, wobei die Verarbeitungseinheit (3) konfiguriert ist, um das Verfahren nach einem der Ansprüche 1 bis 9 zu implementieren.

**Revendications**

**1.** Procédé de reconnaissance par radar de cibles multiples comprenant les étapes consistant à :

✓ acquérir des images ISAR (I) d'une région surveillée ;
✓ détecter des cibles en mouvement (T) dans les images ISAR (I) acquises ; et
✓ classer les cibles en mouvement (T) détectées dans les images ISAR (I) acquises ;

dans lequel l'étape consistant à détecter des cibles en mouvement (T) comprend une étape consistant à déterminer un certain nombre de cibles (T) dans les images ISAR (I) acquises ;
**caractérisé en ce que** l'étape consistant à détecter des cibles en mouvement (T) comprend une étape consistant à appliquer une transformée bidimensionnelle aux images ISAR (I) acquises de façon à générer des images ISAR transformées ($I_T$).

**2.** Procédé selon la revendication 1, dans lequel l'étape consistant à appliquer une transformée bidimensionnelle comprend une étape consistant à ajouter les valeurs des points des images ISAR (I) acquises, alignées le long de lignes qui présentent une pente (M) et une interception (Q) qui varient dans des domaines respectifs.

**3.** Procédé selon la revendication 2, dans lequel la transformée bidimensionnelle est une transformée de Radon.

**4.** Procédé selon la revendication 2, dans lequel la transformée bidimensionnelle est une transformée de Hough.

**5.** Procédé selon l'une quelconque des revendications 2 à 4, dans lequel l'étape consistant à appliquer une transformée bidimensionnelle comprend une étape consistant à déterminer un domaine de pente autour d'une pente de référence ($M_0$) selon l'équation :

$$M_0 = \frac{\Delta f_D}{\Delta r} = -\frac{2}{\lambda}\left[ (\tan \psi)\, \omega_H + \frac{\tan \xi}{\cos \psi}\, \omega_V \right]$$

où r et $f_D$ sont la distance et les coordonnées Doppler, respectivement, dans les images ISAR (I) acquises ; $\psi$ est l'inclinaison de l'antenne d'un dispositif émetteur récepteur radar (2) qui fournit des impulsions électromagnétiques de façon à acquérir les images ISAR (I) ; $\xi$ est un angle de présentation ; $\lambda$, est une longueur d'onde des impulsions électromagnétiques émises par le dispositif émetteur récepteur radar (2) ; et $\omega_V$ et $\omega_H$ sont des composantes de la vitesse angulaire le long des axes vertical et horizontal, respectivement, par rapport à une ligne de visée (LOS) du dispositif émetteur récepteur radar (2).

**6.** Procédé selon la revendication 5, dans lequel l'étape consistant à appliquer une transformée bidimensionnelle comprend une étape consistant à définir un domaine de pente autour d'une pente de référence ($M_0$) selon l'équation :

$$M_0 = \frac{\Delta f_D}{\Delta r} = -\frac{2}{\lambda}\frac{\tan \xi}{\cos \psi}\, \omega_V$$

**7.** Procédé selon l'une quelconque des revendications 1 à 6, dans laquelle l'étape consistant à détecter des cibles (T) comprend une étape consistant à chercher des maximums ($M_{MAX}$, $Q_{MAX}$) dans les images ISAR transformées ($I_T$).

**8.** Procédé selon la revendication 7, comprenant l'étape consistant à utiliser les maximums ($M_{MAX}$, $Q_{MAX}$) dans les images ISAR transformées ($I_T$) de façon à déterminer les positions ($P_{IN}$, $P_{FN}$) des cibles (T) dans les images ISAR (I) acquises correspondantes.

**9.** Procédé selon la revendication 8, comprenant l'étape consistant à exécuter un filtrage bidimensionnel des images ISAR (I) acquises de manière locale autour des positions ($P_{IN}$, $P_{FN}$) des cibles (T) de façon à séparer des parties respectives ($I_P$) des images ISAR (I) acquises pour chaque cible (T).

**10.** Appareil de reconnaissance par radar de cibles multiples comprenant un dispositif émetteur récepteur radar (2) et une unité de traitement (3), dans lequel l'unité de traitement (3) est configurée de façon à appliquer le procédé selon l'une quelconque des revendications 1 à 9.

Fig.1

EP 1 936 402 B1

Fig.2

Fig.3

$\alpha = \arctan M_{MAX}$

Fig.4

$\alpha = \text{arctan } M_{MAX}$

# Fig.5a

# Fig.5b

# Fig.6

Fig.7

Fig.8

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LUO et al.** ISAR Imaging of Multiple Targets Based on Adaptive Gaussian Chirplet Decomposition. *PROCEEDINGS OF 2006 CIE INTERNATIONAL CONFERENCE ON RADAR,* 19 October 2006, 1-4